# EUROPEAN PATENT APPLICATION

(11) **EP 2 963 992 A1**
(43) Date of publication of application: **06.01.2016**
(21) Application number: 13880082.6
(22) Date of filing: 12.08.2013
(51) Int. Cl.: H04W 88/06

(54) **METHOD AND DEVICE FOR DISPLAYING AND PROCESSING APPLICATION NAME OF MULTIMODE CARD OF MOBILE TERMINAL**

(30) Priority: 29.03.2013 CN 201310108733
(71) Applicant: ZTE Corporation, Shenzhen, Guangdong 518057 (CN)
(72) Inventor: YAN, Haiqing, Shenzhen Guangdong 518057 (CN); XUE, Tao, Shenzhen Guangdong 518057 (CN)
(74) Representative: Awapatent AB
(86) International application number: PCT/CN2013/081261
(87) International publication number: WO 2014/153912

(57) **Abstract**

A method for displaying and processing an application name of a multi-mode card of a mobile terminal includes: when a user identification card in a card slot of the mobile terminal is identified as a multi-mode card, determining a current working mode of the multi-mode card; reading a card application instruction of the current working mode from the multi-mode card; and according to the card application instruction, obtaining a card application name of the multi-mode card in the current working mode and displaying the card application name.

## Description

### Technical Field

The present invention relates to the mobile terminal communication technology, and particularly, to a method and device for displaying and processing an application name of a multi-mode card of a mobile terminal.

### Background of the Related Art

With the appearance of multi-mode cards, this kind of cards bring convenience to the communication, but how to be able to rapidly and accurately display an application name of the multi-mode card to the user and normally perform handover of the card application name becomes a problem.

The existing ways only relate to the method for processing card applications of single user identification cards, such as a single User Identity Module (UIM) card and a single Subscriber Identity Module (SIM) card, with regard to the multi-mode case that the terminal is in various network modes, it can only process and display the card application name in one network mode, and it cannot switch normally to display a corresponding card application name according to the difference of the network modes, which has a great limitation.

### Summary of the Invention

The embodiments of the present invention provide a method and device for displaying and processing an application name of a multi-mode card of a mobile terminal, when the user uses a mobile phone with the multi-mode card, a card application name can be displayed rapidly and correctly, which improves the user experience.

According to one aspect of the embodiment of the present invention, a method for displaying and processing an application name of a multi-mode card of a mobile terminal is provided, which comprises:
when a user identification card in a card slot of the mobile terminal is identified as a multi-mode card, determining a current working mode of the multi-mode card;
reading a card application instruction of the current working mode from the multi-mode card; and
according to the card application instruction, obtaining a card application name of the multi-mode card in the current working mode and displaying the card application name.

Before the user identification card in the card slot of the mobile terminal is identified as the multi-mode card, the method comprises:
detecting a card state of the user identification card; and
when detecting that the user identification card is in an activated state, identifying a card type of the user identification card.

The method further comprises:
when a working mode of the multi-mode card is switched, redetermining a current working mode of the multi-mode card;
reading a card application instruction of a redetermined current working mode of the multi-mode card from the multi-mode card; and
according to the card application instruction of the redetermined current working mode, obtaining a card application name of the multi-mode card in the redetermined current working mode and displaying the card application name.

With regard to a multi-mode dual-standby mobile terminal with a multi-mode card and a single-mode card, the method further comprises: respectively displaying a card application name of the multi-mode card in the current working mode and a card application name of the single-mode card in the current working mode.

With regard to a multi-mode dual-standby mobile terminal with two multi-mode cards, the method further comprises: respectively displaying a card application name of one of the two multi-mode cards in the current working mode.

The method further comprises: when the card type is identified as a single-mode card, directly displaying a card application name of the single-mode card in the current working mode.

The method further comprises: when the multi-mode card cannot acquire card subscription information, displaying that a card application cannot be processed.

According to another aspect of the embodiment of the present invention, a device for displaying and processing an application name of a multi-mode card of a mobile terminal is provided, which comprises:
a working mode determination module, configured to: when a user identification card in a card slot of the mobile terminal is identified as a multi-mode card, determine a current working mode of the multi-mode card;
a card application instruction acquisition module, configured to: read a card application instruction of the current working mode of the multi-mode card from the multi-mode card; and
a card application name display module, configured to: according to the card application instruction, obtain a card application name of the multi-mode card in the current working mode and display the card application name.

The device further comprises:
a detection module, configured to: detect a card state of the user identification card; and
an identification module, configured to: when detecting that the user identification card is in an activated state, identify a card type of the user identification card.

The device further comprises: a working mode switch and display unit, configured to: when a working mode of the multi-mode card is switched, redetermine a current working mode of the multi-mode card, and read a card application instruction of a redetermined current working mode from the multi-mode card, and according to the card application instruction of the redetermined current working mode, obtain a card application name of the multi-mode card in the redetermined current working mode and display the card application name.

The embodiments of the present invention are simple and practicable, in the original user identification card application processing mode, a method and device for displaying an application name of a multi-mode card can be introduced into the mobile terminal equipment, and the device completes the displaying and calling of the application name of the multi-mode card by transmitting and processing signals. On one hand, the display problem of the card application name of the multi-mode card can be solved, on the other hand, good user experience can be brought.

### Brief Description of Drawings

FIG. 1 is a flow chart of a method for displaying and processing an application name of a multi-mode card of a mobile terminal according to the embodiment of the present invention.
FIG. 2 is a schematic diagram of a device for displaying and processing an application name of a multi-mode card of a mobile terminal according to the embodiment of the present invention.
FIG. 3 is a flow chart of a method for displaying and processing an application name of a multi-mode card of a mobile terminal provided in the embodiment 1 of the present invention.
FIG. 4 is a schematic diagram of a system for displaying and processing an application name of a multi-mode card of a mobile terminal provided in the embodiment 2 of the present invention.
FIG. 5 is a flow chart of a method for displaying and processing an application name of a multi-mode card of a mobile terminal provided in the embodiment 3 of the present invention.
FIG. 6 is a flow chart of a method for displaying and processing an application name of a multi-mode card of a mobile terminal provided in the embodiment 4 of the present invention.

### Preferred Embodiments of the Invention

The preferred embodiments of the present invention will be described in detail in combination with the accompanying drawings below. It should be understood that the preferred embodiments described below are only used to describe and explain the present invention, which is not used to limit the present invention. It should be noted that the embodiments in the present invention and the characteristics in the embodiments can be optionally combined with each other in the condition of no conflict.

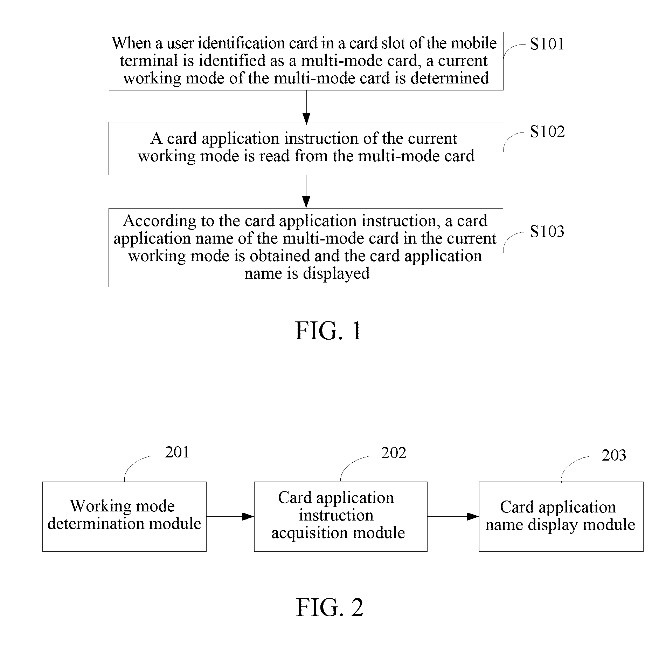

FIG. 1 shows a flow chart of a method for displaying and processing an application name of a multi-mode card of a mobile terminal according to the embodiment of the present invention, and as shown in FIG. 1, the following steps are included.

In step S101, when a user identification card in a card slot of the mobile terminal is identified as a multi-mode card, a current working mode of the multi-mode card is determined.

In step S102, a card application instruction of the current working mode of the multi-mode card is read from the multi-mode card.

In step S103, according to the card application instruction, a card application name of the multi-mode card in the current working mode is obtained and the card application name is displayed.

Before the user identification card in the card slot of the mobile terminal is identified as the multi-mode card, the method according to the embodiment of the present invention includes: detecting a card state of the user identification card; and when detecting that the user identification card is in an activated state, identifying a card type of the user identification card.

The embodiment of the present invention also includes: when a working mode of the multi-mode card is switched, redetermining a current working mode of the multi-mode card; reading a card application instruction of a redetermined current working mode of the multi-mode card from the multi-mode card; and according to the card application instruction, obtaining a card application name of the multi-mode card in the redetermined current working mode and displaying the card application name.

In the embodiment of the present invention, with regard to a multi-mode dual-standby mobile terminal with a multi-mode card and a single-mode card, the method also includes: respectively displaying a card application name of the multi-mode card in the current working mode and a card application name of the single-mode card in the current working mode; with regard to a multi-mode dual-standby mobile terminal with two multi-mode cards, the method also includes: respectively displaying a card application name of one of the two multi-mode cards in the current working mode.

The embodiment of the present invention also includes: when the card type is identified as a single-mode card, directly displaying a card application name of the single-mode card in the current working mode.

The embodiment of the present invention also includes: when the multi-mode card cannot acquire card subscription information, displaying that a card application cannot be processed.

FIG. 2 shows a schematic diagram of a device for displaying and processing an application name of a multi-mode card of a mobile terminal according to the embodiment of the present invention, and as shown in FIG. 2, it includes: a working mode determination module 201, configured to: when a user identification card in a card slot of the mobile terminal is identified as a multi-mode card, determine a current working mode of the multi-mode card; a card application instruction acquisition module 202, configured to: read a card application instruction of the current working mode of the multi-mode card from the multi-mode card; and a card application name display module 203, configured to: according to the card application instruction, obtain a card application name of the multi-mode card in the current working mode and display the card application name.

The embodiment of the present invention also includes: a detection module, configured to: detect a card state of the user identification card; an identification module, configured to: when detecting that the user identification card is in an activated state, identify a card type of the user identification card; and a working mode switch and display unit, configured to: when a working mode of the multi-mode card is switched, redetermine a current working mode of the multi-mode card, and read a card application instruction of the redetermined current working mode of the multi-mode card from the multi-mode card, and according to the card application instruction of the redetermined current working mode, obtain a card application name of the multi-mode card in the redetermined current working mode and display the card application name.

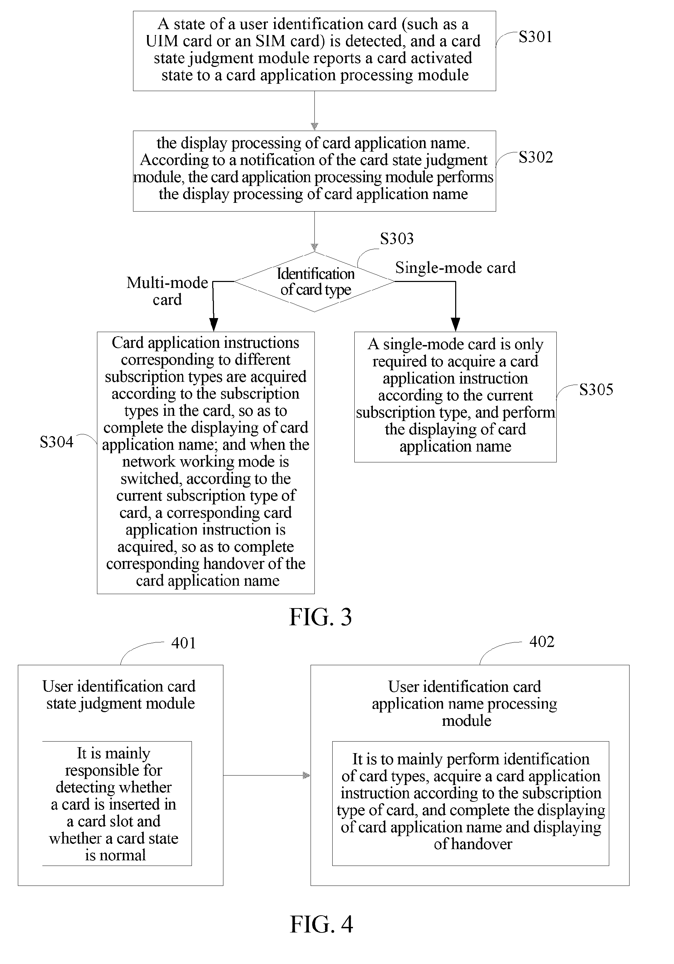

FIG. 3 shows a flow chart of a method for displaying and processing an application name of a multi-mode card of a mobile terminal provided in the embodiment 1 of the present invention, and the following steps are specifically included.

In step S301, a state of a user identification card (such as a UIM card or an SIM card) is detected, and a card state judgment module reports a card activated state to a card application processing module.

Firstly a card insertion condition of the card slot is judged, it is to determine whether it is double card slots or a single card slot, if it is the double card slots, it is to judge whether a card is inserted in a card slot 1 and a card slot 2 and report a card state to the card application processing module, and if the card is inserted in the card slot 1, it is to judge whether the card state is normal, if the state is an activated state, the activated state is reported to the card application processing module; then it is to judge whether the card is inserted in the card slot 2, if the state is an activated state, the activated state is reported to the card application processing module; and if it is the single card slot, a card activated state is directly reported to the card application processing module.

In step S302, according to a notification of the card state judgment module, the card application processing module performs the display processing of card application name.

In step S303, through the identification of card file, card types of single-mode card and multi-mode card are identified.

In step S304, if it is a multi-mode card, card application instructions corresponding to different subscription types should be respectively acquired according to the subscription types of card so as to complete the displaying of card application name, and when the network mode is switched, according to the current subscription type of card, a corresponding card application instruction is acquired, and the handover of corresponding card application menu display is performed. In this case, with regard to the card application processing in a multi-mode single-standby (single card slot) condition, it is required to correctly display different card application names according to the subscription types of card in different network working modes: displaying an A card application in a network mode A, displaying a B card application in a network mode B and displaying a C card application in a network mode C and so on, and when the network mode is switched, the correct handover display of the card application names can be correspondingly performed to provide a correct card application menu for the user. With regard to the card application processing in a multi-mode dual-standby (double card slots) condition, the multi-mode dual-standby card application display is similar to the display of card application name in the multi-mode single-standby, and according to subscription types in different cards, card application instructions are respectively acquired to differentiate card applications of a card 1 and card applications of a card 2: the card 1 is marked as a card 1 A card application, a card 1 B card application and a card 1 C card application and so on; the card 2 is marked as a card 2 A card application, a card 2 B card application and a card 2 C card application and so on.

In step S305, if it is a single-mode card, it is only required to acquire a card application instruction according to a subscription type, and display an A card application menu name in a network A.

Moreover, when card subscription type information cannot be acquired (when it is an invalid card or PIN code/PUK code checking is not passed), it is always displayed as a card 1 A card application or a card 2 A card application. When the A card application is used, a correct prompt that the card application cannot be processed is popped up.

FIG. 4 shows a schematic diagram of a system for displaying and processing an application name of a multi-mode card of a mobile terminal provided in the embodiment 2 of the present invention, and as shown in FIG. 4, it includes a user identification card state judgment module 401 and a user identification card application name processing module 402, and the user identification card state judgment module 401 is mainly responsible for detecting whether a card is inserted in a card slot and whether a card state is normal, and reporting a card insertion state to the user identification card application name processing module 402; and after receiving the normal state reported through the card insertion state, the card application name processing module 402 performs the identification of card types, and it acquires a card application instruction according to the subscription type of card, and completes the displaying of card application name.

In the type identification of the user identification card, identification of single-mode card or multi-mode card is mainly performed according to a card file field, thereby deciding to perform distinction of the display processing of card application name brought by the card mode handover. The multi-mode card is required to acquire card application instructions corresponding to different subscription types according to the subscription types in the card, and complete the display processing of card application name, and when the network working mode is switched, according to the current subscription type of card, it acquires a corresponding card application instruction, thereby completing the corresponding handover of the card application name; the single-mode card is only required to acquire a card application instruction according to the current subscription type, and complete the displaying of card application name.

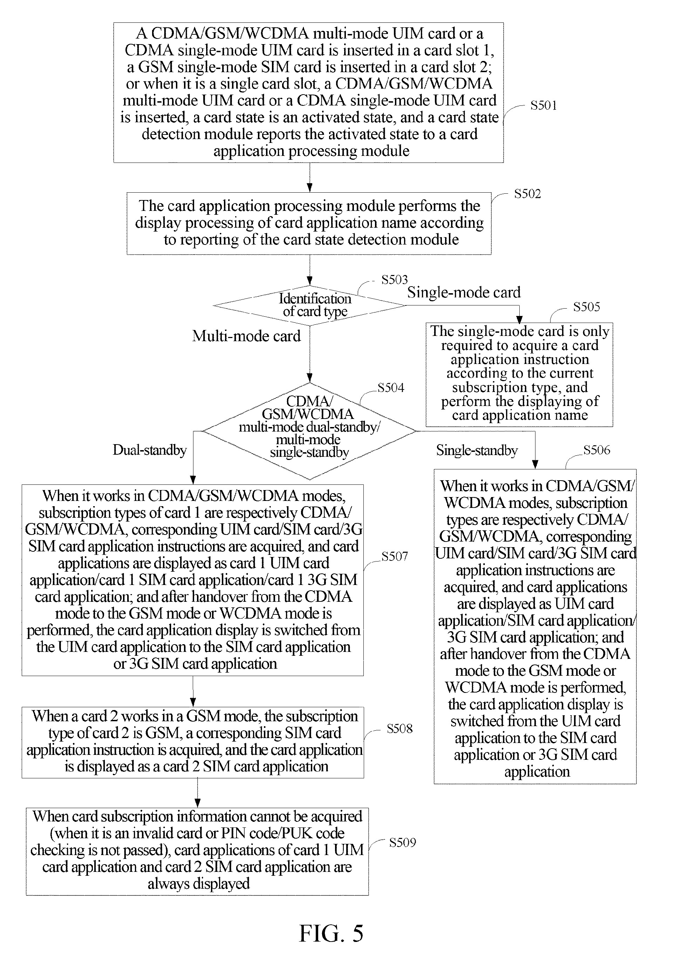

FIG. 5 shows a flow chart of a method for displaying and processing an application name of a multi-mode card of a mobile terminal provided in the embodiment 3 of the present invention, as shown in FIG. 5, a Code Division Multiple Access (CDMA)/Global System for Mobile communications (GSM)/Wideband Code Division Multiple Access (WCDMA) multi-mode UIM card is inserted in a card slot of the mobile phone, it is required to support a UIM card application menu of the CDMA side and an SIM card application menu of the GSM side; and according to the current subscription type of the activated card, a correct card menu and service are presented, and the timely handover between card application menus, namely the handover between a UIM menu and a SIM menu, is supported in a case of handover between multiple network standards.

The implementation of the technical scheme will be described in detail in combination with FIG. 5 below.

In step 501, when the mobile phone has double card slots, a CDMA/GSM/WCDMA multi-mode UIM card is inserted in a card slot 1, a GSM single-mode SIM card is inserted in a card slot 2; or when the mobile phone has a single card slot, a CDMA/GSM/WCDMA multi-mode UIM card is inserted. The state of the card is an activated state, and a card state detection module reports the activated state to a card application processing module.

In step 502, the card application processing module performs corresponding processing according to reporting of the card state detection module.

In step 503, the identification of card type is performed, and the mobile terminal identifies the user card type through the following rules.

When the user identification card of the mobile terminal simultaneously meets the following conditions, the user identification card inserted in the mobile terminal is a multi-mode card: A. the card file EF 7F25 and card file EF 7F20 are able to respectively acquire necessary parameters and data such as an IMSI and so on in respective directories; B. MCC+MNC in the IMSI in the card file EF 7F20 is a valid sequence, and a corresponding actual network number can be searched out in an ITU list; when the user identification card of the mobile terminal does not simultaneously meet the above conditions, the user identification card inserted in the mobile terminal is a single-mode card. When the type of the user identification card is the single-mode card, the step 505 is executed; and when the type of the user identification card is the multi-mode card, the step 504 is executed.

In step 504, it is to judge whether the mobile terminal is in a multi-mode dual-standby condition or a multi-mode single-standby condition, and when the mobile terminal is in the multi-mode dual-standby condition, the step 507 is executed, and when the mobile terminal is in the multi-mode single-standby condition, the step 506 is executed.

In step 505, the single-mode card is only required to acquire a card application instruction according to the current subscription type, and complete the displaying of card application name.

In step 506, a CDMA/GSM/WCDMA multi-mode UIM card is inserted in a single card slot, when it works in a CDMA mode, the subscription type of card is CDMA, a corresponding UIM card application instruction is acquired, and the card application is displayed as a UIM card application; when it works in a GSM mode, the subscription type of card is GSM, a corresponding SIM card application instruction is acquired, and the card application is displayed as a SIM card application; when it works in a WCDMA mode, the subscription type of card is WCDMA, a corresponding 3G SIM card application instruction is acquired, and the card application is displayed as a 3G SIM card application; after the terminal performs handover from the CDMA mode to the GSM mode or WCDMA mode, the subscription type of card is switched from the CDMA to the GSM or WCDMA, and the card application display is switched from the UIM card application to the SIM card application or 3G SIM card application.

In step 507, a multi-mode card 1 of a multi-mode dual-standby terminal works in a CDMA mode, the subscription type of card 1 is CDMA, a corresponding UIM card application instruction is acquired, and the card application is displayed as a card 1 UIM card application; when the card 1 works in a GSM mode, the subscription type of card 1 is GSM, and a corresponding SIM card application instruction is acquired; when the card 1 works in a WCDMA mode, the subscription type of card 1 is WCDMA, and a corresponding 3G SIM card application instruction is acquired, and the card application is displayed as a card 1 3G SIM card application; after the card 1 mode is switched from the CDMA mode to the GSM mode or WCDMA mode, the card application display is switched from the UIM card application to the SIM card application or 3G SIM card application.

In step 508, a single-mode card 2 of a multi-mode dual-standby terminal works in a GSM mode, the subscription type of card 2 is GSM, a corresponding SIM card application instruction is acquired, and the card application is displayed as a card 2 SIM card application.

In step 509, when the card subscription information cannot be acquired (when it is an invalid card or PIN code/PUK code checking is not passed), card applications of card 1 UIM card application and card 2 SIM card application are always displayed.

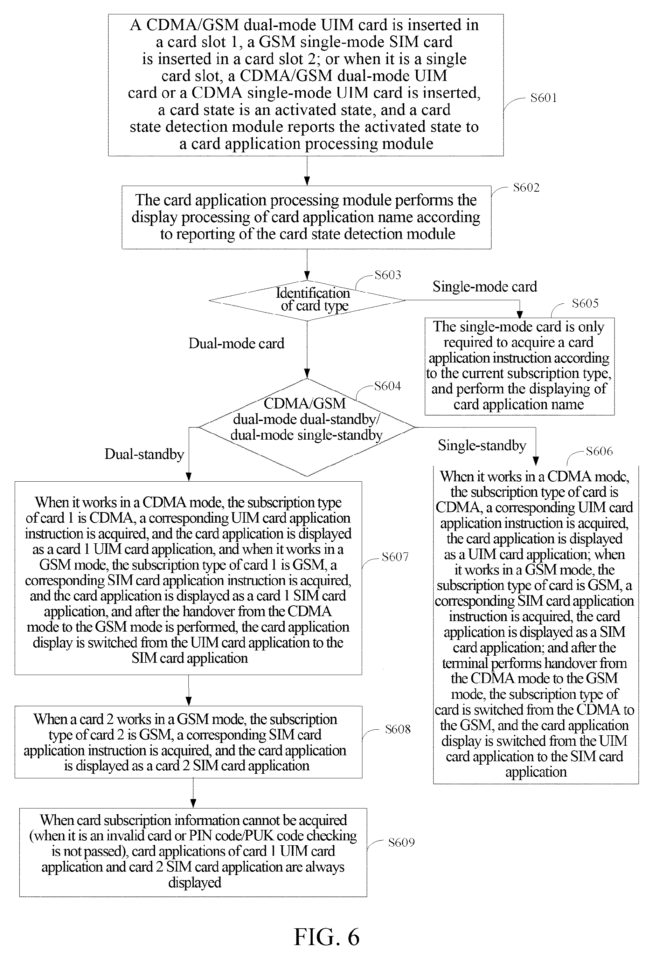

FIG. 6 shows a flow chart of a method for displaying and processing an application name of a multi-mode card of a mobile terminal provided in the embodiment 4 of the present invention, as shown in FIG. 6, a CDMA/GSM dual-mode UIM card is inserted in a card slot 1 in the card slots of the mobile phone, and a GSM single-mode SIM card is inserted in a card slot 2. It is required to support a UIM card application menu of the CDMA side and a SIM card application menu of the GSM side; and according to the current subscription type of activated card, a correct card menu and service are presented (the dual-mode card display a UIM menu in the CDMA mode and displays a SIM menu in the GSM mode), and the timely handover between card application menus, namely the handover between the UIM menu and the SIM menu, is supported in a case of handover between two network standards.

The implementation of the technical scheme will be described in detail in combination with FIG. 6 below.

In step 601, when the mobile phone has double card slots, a CDMA/GSM dual-mode UIM card is inserted in a card slot 1, and a GSM single-mode SIM card is inserted in a card slot 2; or when the mobile phone has a single card slot, a CDMA/GSM dual-mode UIM card is inserted. A card state is an activated state, and a card state detection module reports the activated state to a card application processing module.

In step 602, the card application processing module performs corresponding processing according to reporting of the card state detection module.

In step 603, the identification of card type is performed, and the mobile terminal identifies the user card type through the following rules.

When the user identification card of the mobile terminal simultaneously meets the following conditions, the user identification card inserted in the mobile terminal is a dual-mode card: A. the card file EF 7F25 and card file EF 7F20 are able to respectively acquire necessary parameters and data such as an IMSI and so on in respective directories; B. MCC+MNC in the international mobile subscriber identity IMSI in the card file EF 7F20 is a valid sequence, and a corresponding actual network number can be searched out in an ITU list; when the user identification card of the mobile terminal does not simultaneously meet the above conditions, the user identification card inserted in the mobile terminal is a single-mode card. When the type of the user identification card is the single-mode card, the step 605 is executed; and when the type of the user identification card is the dual-mode card, the step 604 is executed.

In step 604, it is to judge whether the mobile terminal is in a dual-mode dual-standby condition or a dual-mode single-standby condition, and when the mobile terminal is in the dual-mode dual-standby condition, the step 607 is executed, and when the mobile terminal is in the dual-mode single-standby condition, the step 606 is executed.

In step 605, the single-mode card is only required to acquire a card application instruction according to the current subscription type, and complete the displaying of card application name.

In step 606, a CDMA/GSM dual-mode card is inserted in a single card slot, and when it works in a CDMA mode, the subscription type of card is CDMA, a corresponding UIM card application instruction is acquired, and the card application is displayed as a UIM card application; when it works in a GSM mode, the subscription type of card is GSM, a corresponding SIM card application instruction is acquired, and the card application is displayed as a SIM card application; after the terminal performs handover from the CDMA mode to the GSM mode, the subscription type of card is switched from the CDMA to the GSM, and the card application display is switched from the UIM card application to the SIM card application.

In step 607, a dual-mode card 1 of a dual-mode dual-standby terminal works in a CDMA mode, the subscription type of card 1 is CDMA, a corresponding UIM card application instruction is acquired, and the card application is displayed as a card 1 UIM card application; when the card 1 works in a GSM mode, the subscription type of card 1 is GSM, a corresponding SIM card application instruction is acquired, and the card application is displayed as a card 1 SIM card application; after the card 1 mode is switched from the CDMA mode to the GSM mode, the card application display is switched from the UIM card application to the SIM card application.

In step 608, a single-mode card 2 of a dual-mode dual-standby terminal works in a GSM mode, the subscription type of card 2 is GSM, a corresponding SIM card application instruction is acquired, and the card application is displayed as a card 2 SIM card application.

In step 609, when card subscription information cannot be acquired (when it is an invalid card or PIN code/PUK code checking is not passed), card applications of card 1 UIM card application and card 2 SIM card application are always displayed.

In conclusion, the embodiments of the present invention are simple and practicable, which solves a display handover problem of the card applications of the multi-mode card, and brings good user experience to the user.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present invention is not limited to any combination of hardware and software in a specific form.

Though the present invention has been described in detail above, the present invention is not limited to this, and the skilled in the art can make various modifications according to the principle of the present invention. Therefore, it should be understood that all the modifications made according to the principle of the present invention fall into the protection scope of the present invention.

### Industrial Applicability

In the embodiments of the present invention, in the original user identification card application processing mode, a method and device for displaying an application name of a multi-mode card can be introduced into the mobile terminal equipment, and the device completes the displaying and calling of the application name of the multi-mode card by transmitting and processing signals. On one hand, the display problem of the card application name of the multi-mode card can be solved, on the other hand, good user experience can be brought.

## Claims

1. A method for displaying and processing an application name of a multi-mode card of a mobile terminal, comprising:
when a user identification card in a card slot of the mobile terminal is identified as a multi-mode card, determining a current working mode of the multi-mode card;
reading a card application instruction of the current working mode from the multi-mode card; and
according to the card application instruction, obtaining a card application name of the multi-mode card in the current working mode and displaying the card application name.

2. The method according to claim 1, before the user identification card in the card slot of the mobile terminal is identified as the multi-mode card, comprising:
detecting a card state of the user identification card; and
when detecting that the user identification card is in an activated state, identifying a card type of the user identification card.

3. The method according to claim 1, further comprising:
when a working mode of the multi-mode card is switched, redetermining a current working mode of the multi-mode card;
reading a card application instruction of a redetermined current working mode from the multi-mode card; and
according to the card application instruction of the redetermined current working mode, obtaining a card application name of the multi-mode card in the redetermined current working mode and displaying the card application name.

4. The method according to claim 1, with regard to a multi-mode dual-standby mobile terminal with a multi-mode card and a single-mode card, further comprising: respectively displaying a card application name of the multi-mode card in the current working mode and a card application name of the single-mode card in the current working mode.

5. The method according to claim 1, with regard to a multi-mode dual-standby mobile terminal with two multi-mode cards, further comprising: respectively displaying a card application name of one of the two multi-mode cards in the current working mode.

6. The method according to claim 1, further comprising:
when the card type is identified as a single-mode card, directly displaying a card application name of the single-mode card in the current working mode.

7. The method according to claim 1, further comprising:
when the multi-mode card cannot acquire card subscription information, displaying that a card application cannot be processed.

8. A device for displaying and processing an application name of a multi-mode card of a mobile terminal, comprising:
a working mode determination module, configured to: when a user identification card in a card slot of the mobile terminal is identified as a multi-mode card, determine a current working mode of the multi-mode card;
a card application instruction acquisition module, configured to: read a card application instruction of the current working mode from the multi-mode card; and
a card application name display module, configured to: according to the card application instruction, obtain a card application name of the multi-mode card in the current working mode and display the card application name.

9. The device according to claim 8, further comprising:
a detection module, configured to: detect a card state of the user identification card; and
an identification module, configured to: when detecting that the user identification card is in an activated state, identify a card type of the user identification card.

10. The device according to claim 8, further comprising: a working mode switch and display unit, configured to: when a working mode of the multi-mode card is switched, redetermine a current working mode of the multi-mode card, and read a card application instruction of a redetermined current working mode from the multi-mode card, and according to the card application instruction of the redetermined current working mode, obtain a card application name of the multi-mode card in the redetermined current working mode and display the card application name.
